# EUROPÄISCHE PATENTANMELDUNG

(11) **EP 4 178 009 A2**
(43) Veröffentlichungstag der Anmeldung: **10.05.2023**
(21) Anmeldenummer: 22198621.9
(22) Anmeldetag: 29.09.2022
(51) Int. Cl.: H01M 10/613, H01M 10/625, H01M 10/6556

(54) **KÜHLVORRICHTUNG MIT KÜHLABSCHNITTEN UND STABILISIERTEN ÜBERGANGSABSCHNITTEN, BATTERIEANORDNUNG MIT KÜHLVORRICHTUNG UND KRAFTFAHRZEUG**

(30) Priorität: 09.11.2021 DE 102021129095
(71) Anmelder: Audi AG, 85057 Ingolstadt (DE)
(72) Erfinder: Thurmeier, Markus, 84166 Adlkofen (DE); Dirisamer, Florian, 4710 St. Georgen / Grieskirchen (AT)

(57) **Zusammenfassung**

Beschrieben wird eine Kühlvorrichtung (16) mit einem Grundblech (24), das wenigstens eine kanalartige Vertiefung (18v) aufweist; einem Deckblech (26), das auf dem Grundblech (24)angeordnet ist und entlang von Rändern (18r) der kanalartigen Vertiefung (18v) derart mit dem Grundblech (24) verbunden ist, dass es die kanalartige Vertiefung (18v) dicht abschließt, so dass ein Kühlkanal (18) gebildet ist, wobei das Deckblech (26) in Abhängigkeit von einem in dem Kühlkanal (18) wirkenden Kühlfluiddruck (pK) elastisch verformbar ist, und wobei der Kühlkanal (18) bezogen auf die Strömungsrichtung (SK) von einem Kühlfluid wenigstens zwei nacheinander angeordnete Kühlabschnitte (20) mit einem jeweils gleichen ersten Strömungsquerschnitt und wenigstens einen Übergangsabschnitt (22) aufweist, der insbesondere zwischen zwei Kühlabschnitten (20) angeordnet ist. Dabei ist vorgesehen, dass an dem Übergangsabschnitt (22) wenigstens ein Stabilisierungsbereich (SB) vorgesehen ist, in dem das Deckblech (26) und das Grundblech (24) einen geringeren Abstand (AB2) zueinander aufweisen als in den Kühlabschnitten (20), derart dass der Übergangsabschnitt (22) zumindest in dem Stabilisierungsbereich (SB) einen zweiten Strömungsquerschnitt aufweist, der von dem ersten Strömungsquerschnitt verschieden ist. Ferner werden eine Batterieanordnung mit einer solchen Kühlvorrichtung und ein Kraftfahrzeug mit einer solchen Batterieanordnung beschrieben.

## Beschreibung

Die Erfindung betrifft eine Kühlvorrichtung mit einem Grundblech, das wenigstens eine kanalartige Vertiefung aufweist; einem Deckblech, das auf dem Grundblech angeordnet ist und entlang von Rändern der kanalartigen Vertiefung derart mit dem Grundblech verbunden ist, dass es die kanalartige Vertiefung dicht abschließt, so dass ein Kühlkanal gebildet ist, wobei das Deckblech in Abhängigkeit von einem in dem Kühlkanal wirkenden Kühlfluiddruck elastisch verformbar ist, wobei der Kühlkanal bezogen auf die Strömungsrichtung von einem Kühlfluid wenigstens zwei nacheinander angeordnete Kühlabschnitte mit einem jeweils gleichen ersten Strömungsquerschnitt wenigstens einen Übergangsabschnitt aufweist, der insbesondere zwischen zwei Kühlabschnitten angeordnet ist.

Derartige Kühlvorrichtungen werden insbesondere zur Kühlung von Batterieanordnungen, insbesondere Hochvoltbatterien, in zumindest teilweise elektrisch angetriebenen Kraftfahrzeugen eingesetzt. Es wird in diesem Zusammenhang beispielsweise auf die DE 10 2019 133 567 A1, die DE 10 2018 216 708 A1 und die CN 209 447 988 U hingewiesen.

Bei aktuellen Kühlvorrichtungen mit einem elastisch verformbaren bzw. dehnbaren Deckblech, das in Fachjargon auch als "aufblasbare Deckschicht" bezeichnet werden kann, existieren Bereiche, in denen das Deckblech im ausgedehnten Zustand nicht an einem zu kühlenden Element, insbesondere Batteriezelle bzw. Batteriezellenmodul anliegt und somit abgestützt ist. In solchen Bereichen kann eine übermäßige Verformung des Deckblechs stattfinden, insbesondere auch nach vielen Betriebszyklen der Kühlvorrichtung mit einhergehenden Druckaufbau und Druckabbau in den Kühlfluidkanälen.

Hierdurch kann eine Schwächung des Materials auftreten mit nachteiligen Auswirkungen auf die Effektivität und Funktionstüchtigkeit der Kühlvorrichtung.

Die der Erfindung zu Grunde liegende Aufgabe wird darin gesehen, eine Kühlvorrichtung anzugeben, bei der obigen Nachteile vermieden werden können.

Diese Aufgabe wird gelöst durch eine Kühlvorrichtung, eine Batterieanordnung und ein Kraftfahrzeug mit den Merkmalen der jeweiligen unabhängigen Patentansprüche. Vorteilhafte Ausgestaltungen mit zweckmäßigen Weiterbildungen sind in den abhängigen Patentansprüchen angegeben.

Vorgeschlagen wird also eine Kühlvorrichtung mit
einem Grundblech, das wenigstens eine kanalartige Vertiefung aufweist; einem Deckblech, das auf dem Grundblech angeordnet ist und entlang von Rändern der kanalartigen Vertiefung derart mit dem Grundblech verbunden ist, dass es die kanalartige Vertiefung dicht abschließt, so dass ein Kühlkanal gebildet ist, wobei das Deckblech in Abhängigkeit von einem in dem Kühlkanal wirkenden Kühlfluiddruck elastisch verformbar ist, und wobei der Kühlkanal bezogen auf die Strömungsrichtung von einem Kühlfluid wenigstens zwei nacheinander angeordnete Kühlabschnitte mit einem jeweils gleichen ersten Strömungsquerschnitt und wenigstens einen Übergangsabschnitt aufweist, der insbesondere zwischen zwei Kühlabschnitten angeordnet ist. Dabei ist vorgesehen, dass an dem Übergangsabschnitt wenigstens ein Stabilisierungsbereich vorgesehen ist, in dem das Deckblech und das Grundblech einen geringeren Abstand zueinander aufweisen als in den Kühlabschnitten, derart dass der Übergangsabschnitt zumindest in dem Stabilisierungsbereich einen zweiten Strömungsquerschnitt aufweist, der von dem ersten Strömungsquerschnitt verschieden ist.

Mit anderen Worten sind das Grundblech oder/und das Deckblech in einem Stabilisierungsbereich einander angenähert. Dies kann insbesondere durch eine dauerhaft vorgesehene Verformung des Grundblechs oder/und des Deckblechs erreicht werden. Dabei bildet ein Stabilisierungsbereich eine Art Verjüngung des Kühlkanalquerschnitts. Durch eine derartige dauerhafte Verformung kann die Kühlvorrichtung im Übergangsabschnitt steifer und stabiler ausgeführt werden, so dass einer übermäßigen temporären Verformung des Deckblechs unter Kühlfluiddruck entgegengewirkt werden kann.

Bei der Kühlvorrichtung kann sich der Stabilisierungsbereich an die entlang von Rändern der kanalartigen Vertiefung verlaufende Verbindung anschließen. Mit anderen Worten ist es möglich, dass ein den Fluidkanal verjüngender Stabilisierungsabschnitt direkt neben oder ggf. sogar in Kontakt mit den Randverbindungen zwischen Grundblech und Deckblech ausgebildet ist.

Bei der Kühlvorrichtung kann der Stabilisierungsbereich gesondert von der entlang von Rändern der kanalartigen Vertiefung verlaufenden Verbindung angeordnet sein. Insbesondere ist es möglich, dass der Stabilisierungsbereich mit einem Abstand zu den Randverbindungen zwischen Grundblech und Deckblech ausgebildet ist.

Bei der Kühlvorrichtung kann der Stabilisierungsbereich im Wesentlichen auf der gesamten Länge des Übergangsabschnitts ausgebildet sein. Hierdurch kann beispielsweise eine Art stabilisierende bzw. versteifende Längsrippe im Deckblech oder/und im Grundblech ausgebildet werden.

Bei der Kühlvorrichtung können im Übergangsabschnitt mehrere gesonderte Stabilisierungsbereiche verteilt angeordnet sein. Beispielsweise können im Grundblech oder/und im Deckblech mehrere punktartige bzw. kreisförmige oder kurze linienartige Verformungen vorgesehen sein, die zu einer Versteifung bzw. Stabilisierung des betreffenden Blechs führen.

Bei der Kühlvorrichtung können die Kühlabschnitte im Wesentlichen geradlinig ausgebildet sein, wobei der Übergangsabschnitt mit den Stabilisierungsbereich fluchtend zu den Kühlabschnitten angeordnet ist. Mit anderen Worten bilden die Kühlabschnitte und der Übergangsabschnitt einen fluchtenden bzw. geradlinigen Fluidkanal. Alternativ kann der Übergangsabschnitt eine zumindest teilweise gekrümmte oder gebogene Form aufweisen. Es ist beispielsweise möglich, dass der Übergangsabschnitt in der Form eines Bogens ausgebildet ist, dessen Bogenenden mit den Kühlabschnitten verbunden sind. Dabei kann der bogenförmige Übergangsabschnitt einen Scheitelpunkt aufweisen, der etwas höher bzw. tiefer als die Kühlabschnitte angeordnet ist. Durch eine zumindest teilweise gebogene bzw. gekrümmte Ausgestaltung kann eine zusätzliche Stabilisierung bzw. Versteifung des Übergangsabschnitts erreicht werden.

Bei der Kühlvorrichtung kann die Wandstärke des Grundblechs in den Kühlabschnitten und in dem Übergangsabschnitt gleich sein. Ferner kann bei der Kühlvorrichtung die Wandstärke des Deckblechs in den Kühlabschnitten und in dem Übergangsabschnitt gleich sein. Mit anderen Worten weist die Kühlvorrichtung ein jeweiliges Grundblech und ein jeweiliges Deckblech auf, die jeweils eine gleiche bzw. konstante Dicke aufweisen, unabhängig davon, ob ein Kühlabschnitt oder ein Übergangsabschnitt gebildet ist.

Bei der Kühlvorrichtung können das Grundblech und das Deckblech in dem Stabilisierungsbereich derart ausgebildet sein, dass sie sich berühren. Hierdurch wird zwar der Fluidkanalquerschnitt stärker verkleinert, aber bei sich berührendem Grundblech und Deckblech kann eine zusätzlich stabilisierte Ausgestaltung des Übergangsabschnitts ermöglicht werden.

Vorgeschlagen wird auch eine Batterieanordnung mit wenigstens zwei nebeneinander angeordneten Batteriezellenmodulen, die jeweils mehrere Batteriezellen aufweisen, und mit einer oben beschriebenen Kühlvorrichtung, die angrenzend an die Batteriezellenmodule angeordnet ist, derart dass jedem Batteriezellenmodul wenigstens ein Kühlabschnitt zugeordnet ist und dass ein zwischen zwei Kühlabschnitten vorhandener Übergangsabschnitt in einem Randbereich von wenigstens einem der Batteriezellenmodule angeordnet ist. Dabei ist die Kühlvorrichtung insbesondere unterhalb der Batteriezellenmodule angeordnet, derart, dass das Grundblech tiefer liegt als das Deckblech. Anders ausgedrückt ist das Deckblech den Batteriezellenmodulen zugewandt und das Grundblech ist von diesen abgewandt.

Bei der Batterieanordnung kann der Übergangsabschnitt der Kühlvorrichtung einen zwischen zwei benachbarten Batteriezellenmodulen vorhandenen Abstand überbrücken. Ein solcher Abstand bildet einen Bereich, in dem die Kühlvorrichtung nicht durch die Batteriezellenmodule abgestützt ist und der Kühlfluidkanal eine Art Brücke von dem einen Batteriezellenmodul zu dem benachbarten Batteriezellenmodul bildet. Durch die Anordnung des Übergangsabschnitts mit dem wenigstens einen Stabilisierungsbereich genau zwischen zwei benachbarten Batteriezellenmodulen kann die Stabilisierung bzw. Versteifung der Kühlvorrichtung bzw. des Kühlfluidkanals genau an der Stelle der Batterieanordnung bereitgestellt werden, an der das unter Fluiddruck verformte Deckblech nicht durch die Batteriezellenmodule abgestützt ist.

Bei der Batterieanordnung kann das Deckblech der Kühlvorrichtung den Batteriezellenmodulen derart zugewandt sein, dass das Deckbleck in Abhängigkeit von dem herrschenden Kühlfluiddruck zumindest teilweise in wärmeleitendem Kontakt mit dem betreffenden Batteriezellenmodul steht. Hierdurch wird eine optimierte Wärmeübertragung zwischen Batteriezellenmodul und Kühlvorrichtung, insbesondere Kühlfluid ermöglicht.

Ein Kraftfahrzeug mit zumindest teilweise elektrischem Antrieb kann mit einer oben beschriebenen Batterieanordnung ausgeführt sein. Dabei kann die Batterieanordnung mit der Kühlvorrichtung so angeordnet sein, dass unterhalb des Grundblechs eine Unterbodenschutzelement bzw. Unterfahrschutzelement des Kraftfahrzeugs angeordnet ist.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: in den Teilfiguren A) bis C) vereinfacht und schematisch jeweils beispielhaft zwei Batteriezellenmodule mit einer Ausführungsform einer Kühlvorrichtung mit Kühlabschnitten und Übergangsabschnitten in einer Draufsicht;
- Fig. 2: eine vereinfachte und schematische Schnittdarstellung eines Teils einer Batteriezelle und eines Kühlabschnitts eines Kühlkanals einer Kühlvorrichtung;
- Fig. 3: in den Teilfiguren A) bis E) vereinfachte und schematische Schnittdarstellungen von Übergangsabschnitten von einem Kühlkanal;
- Fig. 4: in den Teilfiguren A) bis D) vereinfachte und schematische Illustrationen eines Kühlkanals mit Kühlabschnitten und Übergangsabschnitten unterschiedlicher Ausgestaltung in einer Art Draufsicht;
- Fig. 5: in den Teilfiguren A) und B) eine vereinfachte und schematische Schnittansicht mit geradlinigem bzw. gekrümmten Verlauf eines Übergangsabschnitts;
- Fig. 6: eine vereinfachte und schematische Ansicht eines Kraftfahrzeugs mit einer Batterieanordnung mit Kühlvorrichtung.

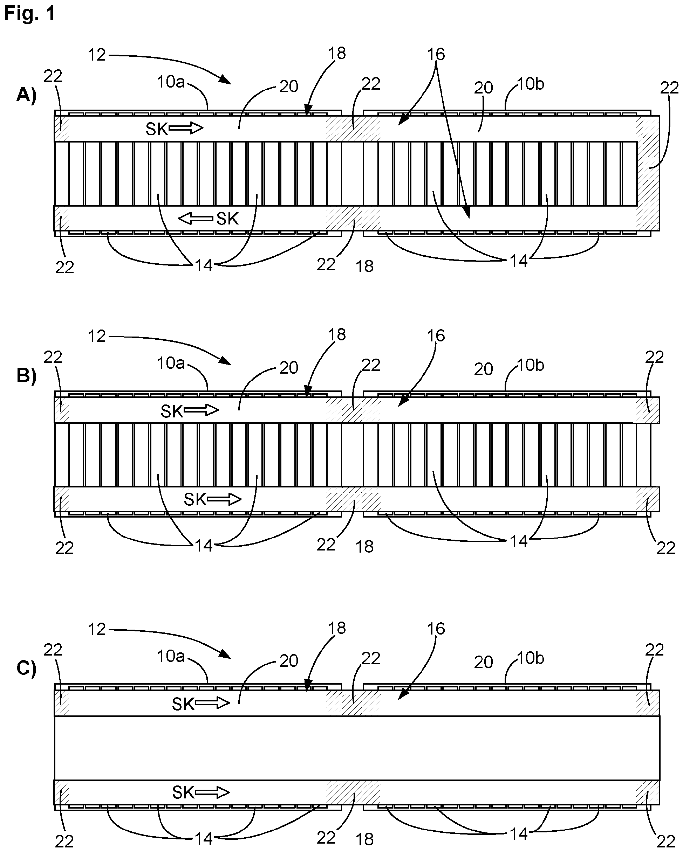

In Fig. 1 sind in den Teilfiguren A) bis C) jeweils zwei Batteriezellenmodule 10a, 10b dargestellt. Die beiden Batteriezellenmodule 10a, 10b illustrieren gemeinsam eine Batterieanordnung 12, die üblicherweise mehr als zwei Batteriezellenmodule 10a, 10b aufweisen. Jedes Batteriezellenmodul 10a, 10b umfasst mehrere Batteriezellen 14, die in den jeweiligen Batteriezellenmodulen 10a, 10b als Package angeordnet sind.

In den Fig. 1A) bis C) sind auch jeweilige Kühlvorrichtungen 16 in vereinfachter und schematischer Weise dargestellt. Die Kühlvorrichtungen 16 weisen dabei wenigstens einen Kühlkanal 18 auf. Jeder Kühlkanal 18 umfasst Kühlabschnitte 20 und Übergangsabschnitte 22. Die Übergangsabschnitte sind zur besseren Erkennbarkeit schraffiert dargestellt, auch wenn Fig. 1 keine Schnittdarstellung ist.

Wie aus den Fig. 1A) bis C) ersichtlich, weist ein Kühlkanal 18 bezogen auf eine durch einen Konturpfeil SK angedeutete Strömungsrichtung von einem Kühlfluid wenigstens zwei nacheinander angeordnete Kühlabschnitte 20 mit einem jeweils gleichen ersten Strömungsquerschnitt und einen zwischen zwei Kühlabschnitten 20 angeordneten Übergangsabschnitt 22 auf.

Ein Übergangsabschnitt 22 ist insbesondere dort angeordnet bzw. ausgebildet, wo der Kühlkanal 18 nicht an eine der Batteriezellen 14 angrenzt. Übergangsabschnitte 22 der Kühlkanäle sind daher nicht nur zwischen zwei Kühlabschnitten 20 möglich, sondern können auch am Anfang bzw. Ende eines Kühlkanals 18 ausgebildet sein, wie dies beispielhaft jeweils auf der linken Seite der Fig. 1A) bis C) und auf der rechten Seite der Fig. 1B und C) ersichtlich ist.

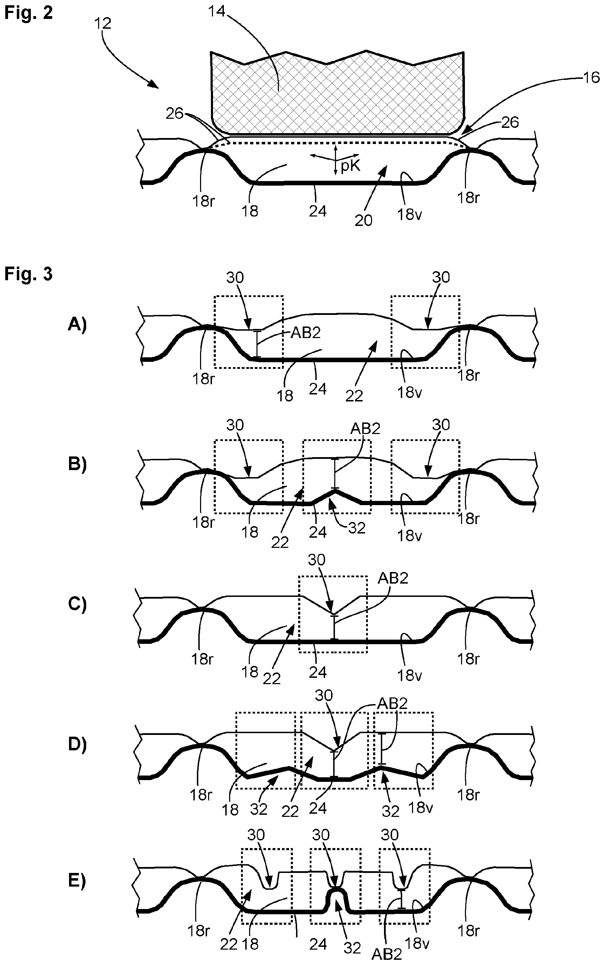

Fig. 2 zeigt in einer vereinfachten Schnittdarstellung einen Kühlkanal 18, der unterhalb einer Batteriezelle 14 eines nicht weiter dargestellten Batteriezellenmoduls 10a, 10b angeordnet ist. Fig. 2 kann beispielsweise etwa einer Schnittlinie II-II der Fig. 1A entsprechen. Der Kühlkanal 18 ist Teil einer Kühlvorrichtung 16, die mehrere solche Kühlkanäle 18 aufweisen kann.

Aus der Fig. 2 ist ersichtlich, dass der Kühlkanal 18 bzw. die Kühlvorrichtung 16 durch ein Grundblech 24 und ein Deckblech 26 gebildet ist. Das Grundblech 24 weist wenigstens eine kanalartige Vertiefung 18v auf. Das Deckblech 26 ist auf dem Grundblech 24 angeordnet. Entlang von Rändern 18r der kanalartigen Vertiefung 18v ist das Deckblech 26 derart mit dem Grundblech 24 verbunden, dass die kanalartige Vertiefung 18v dicht abschließt, so dass ein betreffender Kühlkanal 18 gebildet ist.

Das Deckblech 26 ist dabei so ausgeführt, dass es in Abhängigkeit von einem in dem Kühlkanal 18 wirkenden Kühlfluiddruck pK elastisch verformbar ist, was in Fig. 2 durch gestrichelte Linie des Deckblechs 26 und die Pfeile pK angedeutet ist. Mit anderen Worten ist das Deckblech 26 der Kühlvorrichtung 16 den Batteriezellen 14 bzw. den Batteriezellenmodulen 10a, 10b zugewandt, derart dass das Deckbleck 26 n Abhängigkeit von dem herrschenden Kühlfluiddruck pK zumindest teilweise in wärmeleitendem Kontakt mit der betreffenden Batteriezelle 14 bzw. dem betreffenden Batteriezellenmodul 10a, 10b steht. In Fig. 2 ist dies durch die durchgezogene Linie des Deckblechs 26 angedeutet. Aus rein darstellerischen Gründen ist die durchgezogene Linie des Deckblechs 26 nicht in direktem Kontakt bzw. in Berührung mit der Batteriezelle 14 dargestellt, weil das Deckblech 26 sonst nicht sichtbar wäre. Im praktischen Einsatz stehen aber das nach außen bzw. nach oben verformte Deckblech 26 und die Batteriezelle 14 in Kontakt, so dass eine effektive Wärmeübertragung zwischen Batteriezellenmodul 10a, 10b und dem Kühlfluid in der Kühlvorrichtung 16 ermöglicht ist.

Die Dicke des Grundblechs 24 beträgt zwischen 0,5 mm und 1,0 mm. Die Dicke des Deckblechs 26 ist in der Regel geringer als diejenige des Grundblechs 24. Insbesondere kann die Dicke des Deckblechs von 0,1 mm bis 0,7mm, bevorzugt 0,3 mm bis 0,4 mm betragen.

Fig. 3 zeigt in den Teilfiguren A) bis E) vereinfachte und schematische Schnittdarstellungen des Kühlkanals 18 im Bereich eines Übergangsabschnitts 22. Ein solcher Schnitt kann etwa der Schnittlinie III-III der Fig. 1A entsprechen. Wie bereits erläutert, und aus der Zusammenschau mit den Fig.1 und 2 ersichtlich, sind oberhalb von den Übergangabschnitten 22 des Kühlkanals 18 keine das Deckblech 26 stützende Batteriezellen 14 vorhanden. Entsprechend kann sich das Deckblech 26 in den Übergangsabschnitten 22 stärker und weniger gezielt verformen, als dies in den Bereichen der Batteriezellen 14 der Fall ist.

Um einer solchen unerwünschten Verformung des Deckblechs 26 in den Übergangsbereichen 22 entgegen zu wirken und um die Stabilität des Kühlkanals 18 im Bereich der Übergangsabschnitte 22 zu verbessern, ist wenigstens ein Stabilisierungsbereich SB vorgesehen ist, in dem das Deckblech 26 und das Grundblech 24 einen geringeren Abstand AB2 zueinander aufweisen als in den Kühlabschnitten 20. Der in den Kühlabschnitten 20 übliche Abstand AB1 zwischen Deckbelche 26 und Grundblech 24 ist beispielhaft in Fig. 2 illustriert. Der Übergangsabschnitt weist daher zumindest in dem Stabilisierungsbereich SB einen zweiten Strömungsquerschnitt auf, der von dem ersten Strömungsquerschnitt des Kühlabschnitts 20 (Fig. 2) verschieden ist.

In den Schnittdarstellungen der Fig. 3 sind vereinfacht und schematisch verschiedene Konfigurationen dargestellten, bei denen im Deckblech 26 oder/und im Grundblech 24 im Bereich des Übergangsabschnitts 22 stabilisierende bzw. versteifende Verformungen vorhanden sind.

Im Beispiel der Fig. 3A weist das Deckblech 26 jeweils benachbart zu den Rändern 18r zur Kanalvertiefung 18v bzw. zum Grundblech 24 gerichtete Verformungen 30 auf.

Das Beispiel der Fig. 3B zeigt eine stärkere Verformung 30 des Deckblechs 26 benachbart zu den Rändern 18r und eine zentrale bzw. mittige Verformung 32 des Grundblechs 24 in Richtung es Deckblechs 26.

Das Beispiel der Fig. 3C zeigt eine zentrale bzw. mittige Verformung 30 des Deckblechs.

Das Beispiel der Fig. 3D zeigt die zentrale bzw. mittige Verformung 30 im Deckblech 26 und zwei Verformungen 32 im Grundblech 24.

Das Beispiel der Fig. 3E zeigt eine zentrale bzw. mittige Verformung 30 und zwei seitlich davon angeordnete Verformungen 30 im Deckblech 26 und eine zentrale bzw. mittige Verformung im Grundblech 24. Die beiden zentralen bzw. mittigen Verformungen sind hier beispielhaft so ausgebildet bzw. ausgeprägt, dass zwischen ihnen der Abstand AB2 nahe bei oder gleich Null ist.

Die in den Fig. 3A) bis E) dargestellten Schnittdarstellungen von Übergangsabschnitten 22 des Kühlkanals 18 weisen also jeweilige Verformungen 30, 32 im Deckblech 26 oder/und im Grundblech 24 auf, die dazu dienen, den Übergangsabschnitt 22 stabiler bzw. steifer auszugestalten. Somit kann verhindert werden, dass der in vielen Fällen freitragend ausgeführte Übergangsabschnitt 22 im montierten Zustand und im Betrieb unerwünschten Verformungen ausgesetzt ist.

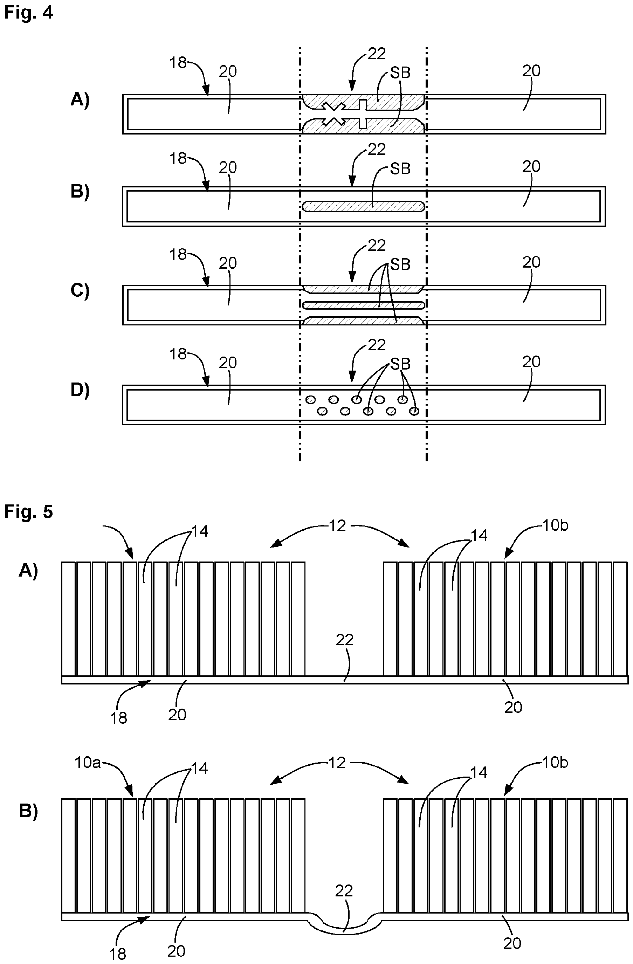

Fig. 4 zeigt in den Teilfiguren A) bis D) vereinfacht und schematisch Kühlkanäle 18 mit Kühlabschnitten 20 und Übergangsabschnitten 22 in einer Art Draufsicht, wobei Verformungen 30, 32 im Deckblech 26 oder/und im Grundblech 26 als schraffierte Stabilisierungsbereiche SB illustriert sind. Die Darstellungen der Fig. 4A) bis D) sollen insbesondere zeigen, dass Verformungen 30, 32 an unterschiedlichen Stellen des Übergangsabschnitts 22 vorgesehen sein können.

Das Beispiel der Fig. 4A zeigt Stabilisierungsbereiche SB, die entlang der Ränder 18r verlaufen. Dabei weisen diese Stabilisierungsbereiche SB eine dem Kühlkanal bzw. Kühlfluid zugewandte Kontur 34 auf, die über Einbuchtungen 36 aufweist.

Fig. 4B zeigt ein Beispiel, bei dem der Stabilisierungsbereich SB gesondert von der entlang von Rändern 18r der kanalartigen Vertiefung 18v verlaufenden Verbindung angeordnet ist. Insbesondere ist der Stabilisierungsbereich SB, der beispielsweise als eine Verformung 30 gemäß Fig. 3C verstanden werden kann, zentral bzw. mittig im Kühlkanal 18 bzw. im Übergangsabschnitt 22 angeordnet.

Fig. 4C zeigt ein Beispiel einer möglichen Kombination von randseitigen Stabilisierungsbereichen SB mit einem zentralen bzw. mittigen Stabilisierungsbereich SB. Eine derartige Ausgestaltung kann beispielsweise zwei randseitige Verformungen 30 im Deckblech 26 und eine zentrale bzw. mittige Verformung 32 im Grundblech 24 aufweisen, wie dies etwa in der Fig. 3B angedeutet ist.

Fig. 4D zeigt ein Beispiel von punktuell angeordneten Stabilisierungsbereichen SB. Dabei kann es sich um punktuelle Verformungen 30, 32 im Deckblech 26 oder/und im Grundblech 24 handeln. Die punktuellen Verformungen 30, 32 sind insbesondere entlang des Kühlkanals 18 bzw. des Übergangsabschnitts 22 verteilt angeordnet, wobei die hier dargestellte versetzte Anordnung lediglich ein Beispiel ist. Denkbar ist auch lediglich eine Abfolge von zentral bzw. mittig angeordneten punktuellen Stabilisierungsbereichen. Denkbar ist auch, dass mehr als zwei Reihen von punktuellen Stabilisierungsbereichen SB vorgesehen werden, etwa in der Art, dass das Deckblech 26 eine golfballartige Struktur aufweisen kann.

In Fig. 5 sind vereinfacht und schematisch zwei seitliche Ansichten von Batteriezellen 14 benachbarter Batteriezellenmodule 10a, 10b dargestellt. Unterhalb der Batteriezellenmodule 10a, 10b bzw. der Batteriezellen 14 ist ein jeweiliger Kühlkanal 18 der Kühlvorrichtung 16 schematisch angedeutet. Der Kühlkanal 18 umfasst, wie bereits oben erläutert, Kühlabschnitte 20 und einen Übergangsabschnitt 22. Der Übergangsabschnitt kann dabei bezogen auf seinen Strömungsquerschnitt eine Ausgestaltung aufweisen, wie sie in Bezug auf die Figuren 3 und 4 beschrieben worden ist.

Ergänzend hierzu kann der Übergangsabschnitt 22 gemäß Fig. 5A einen geradlinigen Verlauf aufweisen. Mit anderen Worten sind der Übergangsabschnitte 22 und die Kühlabschnitte 20 fluchtend bzw. in einer Linie zueinander angeordnet, insbesondere in Bezug auf eine Höhenrichtung Z.

Alternativ ist es auch möglich, dass der Übergangsabschnitt 22 einen gekrümmten Verlauf aufweist, wie dies in der Fig. 5B illustriert ist. Ein derartiger gekrümmter bzw. gebogener Verlauf des Übergangsabschnitts ist in sich ebenfalls etwas steifer bzw. stabiler als ein geradliniger Verlauf. Die Krümmung des Übergangsabschnitts muss auch nicht über die gesamte Länge vorhanden sein, wie dies in der Fig. 5B angedeutet ist. Vielmehr ist es auch denkbar, dass der Übergangsabschnitt beispielsweise nur in einem zentralen bzw. mittigen Bereich eine Krümmung aufweist, die über jeweils kurze fluchtende und geradlinige Stücke mit den Kühlabschnitten 20 verbunden ist.

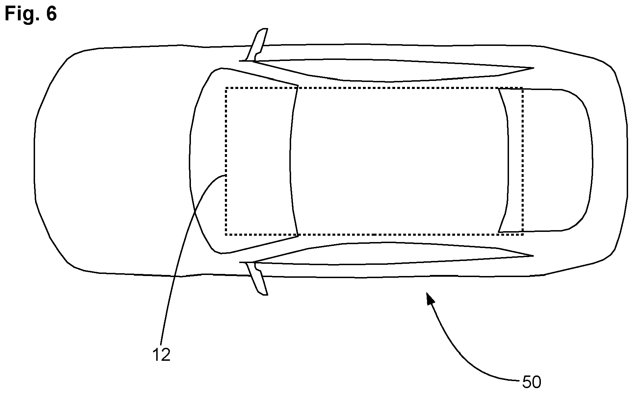

Fig. 6 zeigt vereinfacht und schematisch ein zumindest teilweise elektrisch angetriebenes Kraftfahrzeug 50 mit einer Batterieanordnung 12, insbesondere einer im Unterbodenbereich angeordneten Hochvolt-Batterieanordnung, die in der Fig. 6 als gestricheltes Rechteck illustriert ist. Die bei einer solchen Batterieanordnung eingesetzte Kühlvorrichtung, die in Fig. 6 nicht explizit dargestellt ist, kann dabei in der oben beschriebenen Form ausgeführt sein, also insbesondere mit Übergangsabschnitten, die in der oben beschriebenen Weise stabilisiert bzw. versteift sind durch das Vorsehen bzw. Anordnen von Stabilisierungsbereichen in den Übergangsabschnitten.

## Patentansprüche

1. Kühlvorrichtung (16) mit
einem Grundblech (24), das wenigstens eine kanalartige Vertiefung (18v) aufweist;
einem Deckblech (26), das auf dem Grundblech (24)angeordnet ist und entlang von Rändern (18r) der kanalartigen Vertiefung (18v) derart mit dem Grundblech (24) verbunden ist, dass es die kanalartige Vertiefung (18v) dicht abschließt, so dass ein Kühlkanal (18) gebildet ist,
wobei das Deckblech (26) in Abhängigkeit von einem in dem Kühlkanal (18) wirkenden Kühlfluiddruck (pK) elastisch verformbar ist,
wobei der Kühlkanal (18) bezogen auf die Strömungsrichtung (SK) von einem Kühlfluid wenigstens zwei nacheinander angeordnete Kühlabschnitte (20) mit einem jeweils gleichen ersten Strömungsquerschnitt und wenigstens einen Übergangsabschnitt (22) aufweist, der insbesondere zwischen zwei Kühlabschnitten (20) angeordnet ist,
**dadurch gekennzeichnet, dass** an dem Übergangsabschnitt (22) wenigstens ein Stabilisierungsbereich (SB) vorgesehen ist, in dem das Deckblech (26) und das Grundblech (24) einen geringeren Abstand (AB2) zueinander aufweisen als in den Kühlabschnitten (20), derart dass der Übergangsabschnitt (22) zumindest in dem Stabilisierungsbereich (SB) einen zweiten Strömungsquerschnitt aufweist, der von dem ersten Strömungsquerschnitt verschieden ist.

2. Kühlvorrichtung (16) nach Anspruch 1, **dadurch gekennzeichnet, dass** der Stabilisierungsbereich (SB) sich an die entlang von Rändern (18r) der kanalartigen Vertiefung (18v) verlaufende Verbindung anschließt.

3. Kühlvorrichtung (16) nach Anspruch 1 oder 2, **dadurch gekennzeichnet, dass** der Stabilisierungsbereich (SB) gesondert von der entlang von Rändern (18r) der kanalartigen Vertiefung (18v) verlaufenden Verbindung angeordnet ist.

4. Kühlvorrichtung (16) nach einem der vorhergehenden Ansprüche, **dadurch gekennzeichnet, dass** der Stabilisierungsbereich (SB) im Wesentlichen auf der gesamten Länge des Übergangsabschnitts (22) ausgebildet ist.

5. Kühlvorrichtung (16) nach einem der Ansprüche 1 bis 3, **dadurch gekennzeichnet, dass** im Übergangsabschnitt (22) mehrere gesonderte Stabilisierungsbereiche (SB) verteilt angeordnet sind.

6. Kühlvorrichtung (16) nach einem der vorhergehenden Ansprüche, **dadurch gekennzeichnet, dass** die Kühlabschnitte (20) im Wesentlichen geradlinig ausgebildet sind, wobei der Übergangsabschnitt (22) mit dem Stabilisierungsbereich (SB) fluchtend zu den Kühlabschnitten (20) angeordnet ist oder eine zumindest teilweise gekrümmte oder gebogene Form aufweist.

7. Kühlvorrichtung (16) nach einem der vorhergehenden Ansprüche, **dadurch gekennzeichnet, dass** die Wandstärke des Grundblechs (24) in den Kühlabschnitten (20) und in dem Übergangsabschnitt (22) gleich ist.

8. Kühlvorrichtung (16) nach einem der vorhergehenden Ansprüche, **dadurch gekennzeichnet, dass** die Wandstärke des Deckblechs (26) in den Kühlabschnitten (20) und in dem Übergangsabschnitt (22) gleich ist.

9. Kühlvorrichtung (16) nach einem der vorhergehenden Ansprüche, **dadurch gekennzeichnet, dass** das Grundblech (24) und das Deckblech (26) in dem Stabilisierungsbereich (SB) derart ausgebildet sind, dass sie sich berühren.

10. Batterieanordnung (12) mit wenigstens zwei nebeneinander angeordneten Batteriezellenmodulen (10a, 10b), die jeweils mehrere Batteriezellen (14) aufweisen, und mit einer Kühlvorrichtung (16) gemäß einem der vorhergehenden Ansprüche, die angrenzend an die Batteriezellenmodule (10a, 10b) angeordnet ist, derart dass jedem Batteriezellenmodul (10a, 10b) wenigstens ein Kühlabschnitt (20) zugeordnet ist und dass ein zwischen zwei Kühlabschnitten (20) vorhandener Übergangsabschnitt (22) in einem Randbereich von wenigstens einem der Batteriezellenmodule (10a, 10b) angeordnet ist.

11. Batterieanordnung (12) nach Anspruch 10, **dadurch gekennzeichnet, dass** der Übergangsabschnitt (22) der Kühlvorrichtung (16) einen zwischen zwei benachbarten Batteriezellenmodulen (10a, 10b) vorhandenen Abstand überbrückt.

12. Batterieanordnung (12) nach Anspruch 10 oder 11, **dadurch gekennzeichnet, dass** das Deckblech (26) der Kühlvorrichtung den Batteriezellenmodulen (10a, 10b) zugewandt ist, derart, dass das Deckblech (26) in Abhängigkeit von dem herrschenden Kühlfluiddruck (pK) zumindest teilweise in wärmeleitendem Kontakt mit dem betreffenden Batteriezellenmodul (10a, 10b) steht.

13. Kraftfahrzeug (50) mit zumindest teilweise elektrischem Antrieb und mit einer Batterieanordnung (12) gemäß einem der Ansprüche 10 bis 12.
